# EUROPÄISCHE PATENTSCHRIFT

(11) **EP 1 116 430 B1**
(45) Veröffentlichungstag und Bekanntmachung des Hinweises auf die Patenterteilung: **30.08.2006**
(21) Anmeldenummer: 00126385.4
(22) Anmeldetag: 02.12.2000
(51) Int. Cl.: A01B 59/041

(54) **Dreipunktaufhängung für einen Traktor, Schlepper oder dergleichen**
Three-point hitch for tractors or similar vehicles
Accouplement trois points pour tracteurs ou véhicules similaires

(30) Priorität: 12.01.2000 DE 10000846
(43) Veröffentlichungstag der Anmeldung: 18.07.2001
(73) Patentinhaber: GKN Walterscheid Cramer GmbH, 53797 Lohmar (DE)
(72) Erfinder: Staude, Rudolf, Dr.-Ing., 42111 Wuppertal (DE)
(74) Vertreter: Albrecht, Rainer Harald

(56) Entgegenhaltungen:
- DE-A- 2 852 020
- DE-A- 19 737 318
- DE-U- 29 521 611
- FR-A- 2 475 347
- US-A- 3 910 355
- US-A- 4 181 181
- US-A- 5 201 539
- US-A- 5 246 077

## Beschreibung

Die Erfindung betrifft einer Traktor mit Dreipunktaufhängung zum Heben, Senken und/oder Schwenken von zumindest einem am Traktorheck und/oder an der Traktorfront angeordneten Arbeitsgerät. - Arbeitsgerät meint im Rahmen der Erfindung landwirtschaftliche Geräte oder Maschinen zur Bodenbearbeitung, Düngung, Ernte oder dergleichen wie beispielsweise einen Pflug, eine Egge, einen Düngerstreuer oder eine Erntemaschine. Über die Dreipunktaufhängung erfolgt der Anschluss der Arbeitsgeräte an den Traktor, wobei zugleich die Anpassung der Arbeitshöhe erfolgt. Dazu sind Antriebe verwirklicht, mit denen die Unterlenker verschwenkt werden. Der Oberlenker ist zumeist in passiver Weise mit dem Arbeitsgerät verbunden. Bei modernen Traktoren ist für die Antriebe regelmäßig ein Regelsystem vorgesehen, so dass sich beispielsweise die Arbeitshöhe des Arbeitsgerätes bei Bodenunebenheiten konstant halten lässt (siehe z.B.DE-A-2852020).

Der Erfindung liegt die Aufgabe zugrunde, eine Dreipunktaufhängung der eingangs beschriebenen Ausführungsform zu schaffen, die besonders einfach und funktionsgerecht aufgebaut ist und sich darüber hinaus durch eine optimierte Hubkraftcharakteristik sowie verringerte Baugröße und verringertes Baugewicht und folglich durch eine beträchtliche Kosteneinsparung auszeichnet.

Zur Lösung dieser Aufgabe ist Gegenstand der Erfindung ein Traktor mit Dreipunktaufhängung gemäß Anpruch 1 Im Rahmen der Erfindung meint traktorseitige Anlenkpunkte nicht zwingend eine unmittelbare Anlenkung am Traktor, sondern auf der dem Traktor zugeordneten Seite.

Die erfindungsgemäße Dreipunktaufhängung ist für den Anbau an Front und/oder Heck eines Traktors geeignet. Sie ist als Einheit komplett vormontierbar, voreinstellbar und nachrüstbar. Der Anhängebock kann zugleich mit einer höhenverstellbaren Anhängekupplung ausgerüstet sein, und zwar wahlweise mit diversem Zubehör wie beispielsweise Zugpendel und Pick-up-Hitch. Im übrigen lässt sich bei der erfindungsgemäßen Dreipunktaufhängung eine Kinematik mit einer linearen bzw. leicht progressiven Hubkraftcharakteristik verwirklichen. Sie eignet sich für große und kleine Lasten und zeichnet sich durch eine Längs- und Seitenneigungsjustierung aus.

Erfindungswesentliche Merkmale sind im folgenden aufgeführt. So sieht die Erfindung vor, dass an die Unterlenker Stabilisatoren zum Stabilisieren der Unterlenker angeschlossen sind. Nach der Erfindung ist vorgesehen, dass die Stabilisatoren als in die Unterlenker integrierte Zylinderkolbenanordnungen ausgebildet sind, die im wesentlichen orthogonal zur Traktorlängsachse angeordnet sind und deren Kolbenstangen mit Stabilisierungsbacken mit an dem Anhängebock befestigten und in Richtung der Traktorlängsachse verlaufenden Kurvenscheiben in Eingriff stehen. Diese Stabilisatoren wirken direkt auf die Unterlenker. Die Seitenkräfte werden über die Kurvenscheibe auf den Anhängebock und folglich in der Richtung zur Traktorlängsachse übertragen, in welcher die Seitenkräfte unter Berücksichtigung sich ändernder Hebel- bzw. Übersetzungsverhältnisse auch tatsächlich wirken. Auf diese Weise müssen nur relativ kleine Wege kontrolliert werden, so dass mit verhältnismäßig kleinen Zylinderkolbenanordnungen gearbeitet werden kann. Bei dieser Ausführungsform entfällt die sonst übliche Anlenkung an der Hinterachse des Traktors. Nach dem Herausheben des Arbeitsgerätes aus dem Boden oder Abheben von dem Boden schaltet eine Elektronik die Stabilisatoren automatisch auf eine Mittelstellung "Starr". Der Hub wird über Potentiometer oder Endschalter gemessen. Die erfindungsgemäße Dreipunktaufhängung erfüllt alle einschlägigen DIN- und VDI-Vorschriften für Oberlenker, Unterlenker, Hubstangen sowie für den Heckdreipunktanbau sowie für die relevanten sicherheitstechnischen Anforderungen.

Im einzelnen können die Unterlenker aus zwei steckbaren Lenkerteilen aufgebaut sein, wobei an dem jeweils vorderen Lenkerteil jeweils eine Aufnahme für den Stabilisator vorgesehen bzw. vormontiert ist. - Weiter sieht die Erfindung vor, dass der Anhängebock beidseitig Montagewangen für die auf die Unterlenker arbeitenden Zylinderkolbenanordnungen aufweist. Die Montagewangen weisen zweckmäßigerweise einen U-förmigen Querschnitt zur (teilweisen) Aufnahme der Zylinderkolbenanordnungen auf. Nach einer Ausführungsform der Erfindung können die Zylinderkolbenanordnungen oben gelenkig, zum Beispiel mittels Schwenk- oder Kugellager, mit den Montagewangen und unten gelenkig, z. B. mittels Schwenk- oder Kugellager und gegebenenfalls unter Zwischenschaltung von die Unterlenker übergreifenden Lagergabeln mit den Unterlenkern verbunden sein. Insoweit werden gleichsam "ziehende Hubzylinder" verwirklicht. Nach einer anderen Ausführungsform der Erfindung ist vorgesehen, dass die Zylinderkolbenanordnungen unten gelenkig, z. B. mittels Schwenk- oder Kugellager mit den Montagewangen und oben gelenkig, z. B. mittels Schwenk- oder Kugellager mit Schwenkgabeln nach Art von Kipphebeln verbunden sind, und dass die Schwenkhebel unter Zwischenschaltung von Hubstangen an die Unterlenker angeschlossen sind. Die Hubstangen sind vorzugsweise mittels Schwenk- oder Kugellager einerseits an die Schwenkhebel, andererseits an die Unterlenker angeschlossen. Insoweit arbeiten die Zylinderkolbenanordnungen als gleichsam "drückende" Hubzylinder. Ferner kann nach Lehre der Erfindung der Oberlenker selbst auch von einer an dem Anhängebock angelenkten Zylinderkolbenanordnung ausgebildet sein. Die Kolbenstange dieser Zylinderkolbenanordnung oder deren Zylinder ist gelenkig, z. B. mittels Schwenk- oder Kugellager an eine dreieckförmige Lenkerkonstruktion und die Lenkerkonstruktion gelenkig an die Unterlenkerenden angeschlossen.

Die durch die Erfindung erreichten Vorteile sind im wesentlichen darin zu sehen, dass eine einfache und funktionsgerechte Dreipunktaufhängung verwirklicht wird, die sich durch verringerte Baugröße und verringertes Baugewicht und folglich beträchtliche Kosteneinsparung auszeichnet. Das wird im wesentlichen durch die nach hinten verlagerten Anlenkungspunkte für die Unterlenker sowie die nach hinten verlagerte Anordnung der Zylinderkolbenanordnungen bewirkt. Aber auch die Anordnung und Ausbildung der Stabilisatoren führt zu einer Verringerung der Baugröße und des Baugewichtes, weil nur noch relativ kleine Wege zu kontrollieren sind. Die Lagerung verschiedener Komponenten der erfindungsgemäßen Dreipunktaufhängung am Getriebe entfällt. Vielmehr entsteht durch die erfindungsgemäße Ausführungsform mehr Raumfreiheit am Heck oder an der Front des Traktors. Die Anordnung der nach innen wirkenden Stabilisatoren erlaubt ferner eine größere Raumfreiheit zu den Antriebsrädern. Folglich sind die Stabilisatoren besonders für schmalbauende Traktoren (Plantage- und Weinbautraktoren) geeignet. Die Verkabelung kann für die erfindungsgemäße Dreipunktaufhängung und folglich für die komplette Einheit vorab unabhängig von der Endmontage an den Traktoren vorgenommen werden. Das führt zu einer Einsparung an Montagekosten. Eine weitere Kostenersparnis wird dadurch erreicht, dass Arbeiten am Getriebe zur Aufnahme verschiedener Komponenten der Dreipunktaufhängung entfallen. Die erfindungsgemäße Konzeption der Dreipunktaufhängung bewirkt schließlich aufgrund der veränderten Hebelverhältnisse, dass kleinere Kräfte über den Anhängebock in das Getriebe des Traktors eingeleitet werden. Das wiederum führt zur Kostenersparnis bei der Dimensionierung des Getriebes bzw. durch den Fortfall getriebeseitiger Bearbeitungsflächen.

Im folgenden wird die Erfindung anhand einer lediglich ein Ausführungsbeispiel darstellenden Zeichnung näher erläutert. Es zeigen:
- **Fig. 1**: eine Dreipunktaufhängung zwischen zwei Traktorrädern in schematischer Darstellung,
- **Fig. 2**: den Gegenstand nach Fig. 1 ohne Traktorräder,
- **Fig. 3**: eine erfindungsgemäße Ausführungsform des Gegenstandes nach Fig. 1,
- **Fig. 4**: den Gegenstand nach Fig. 3 ohne Traktorräder,
- **Fig. 5**: eine Seitenansicht auf den Gegenstand nach Fig. 4,
- **Fig. 6**: eine weitere erfindungsgemäße Ausführungsform des Gegenstandes nach Fig. 1 und
- **Fig. 7**: eine Seitenansicht auf den Gegenstand nach Fig. 6.

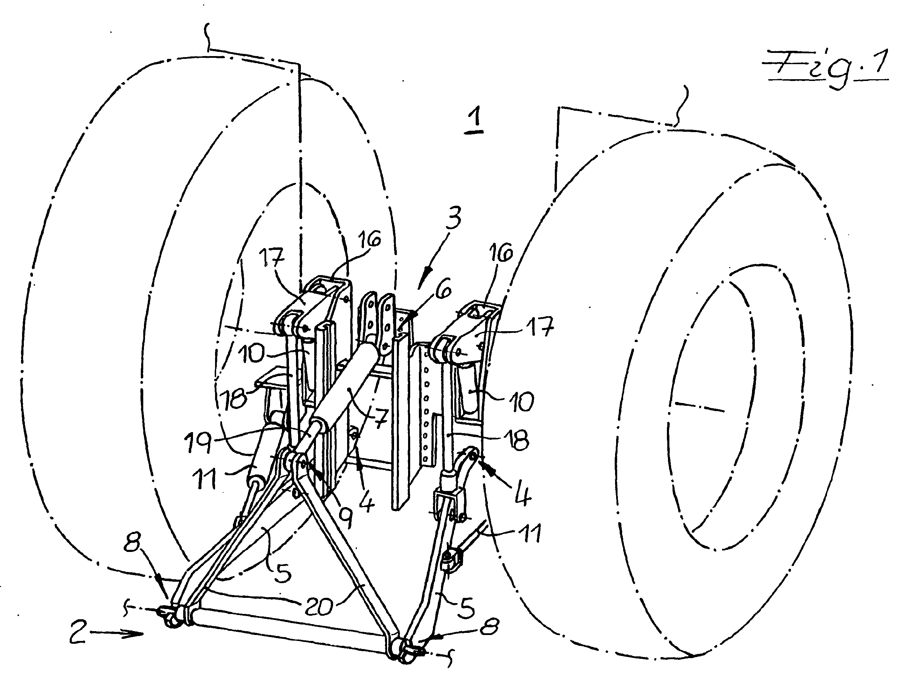

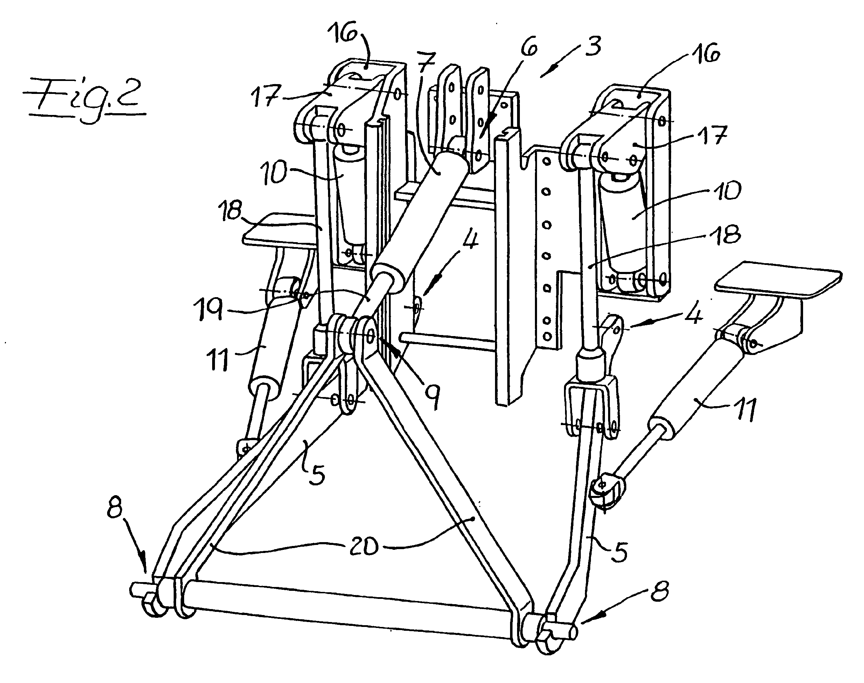

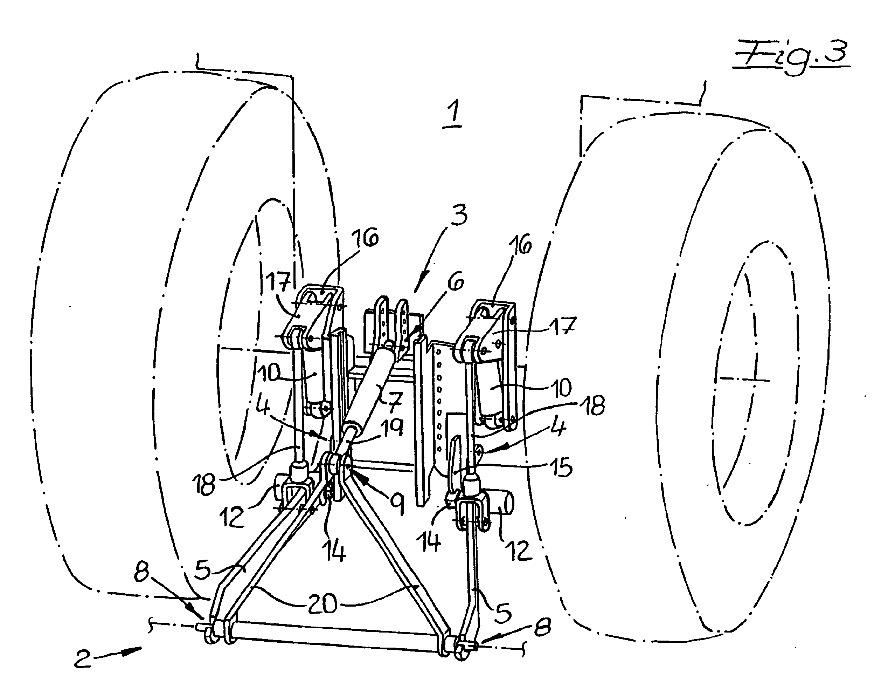

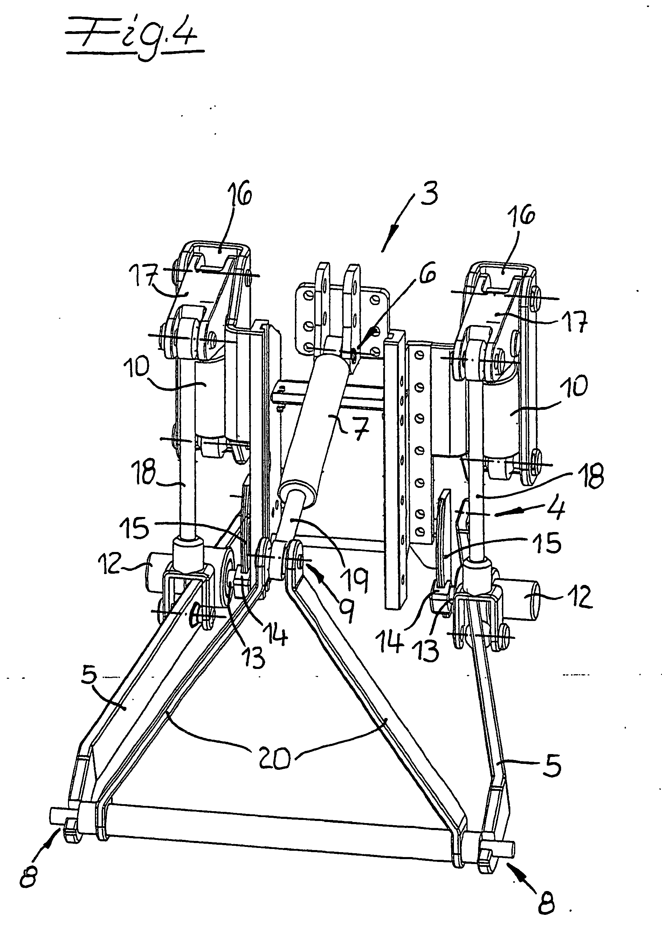

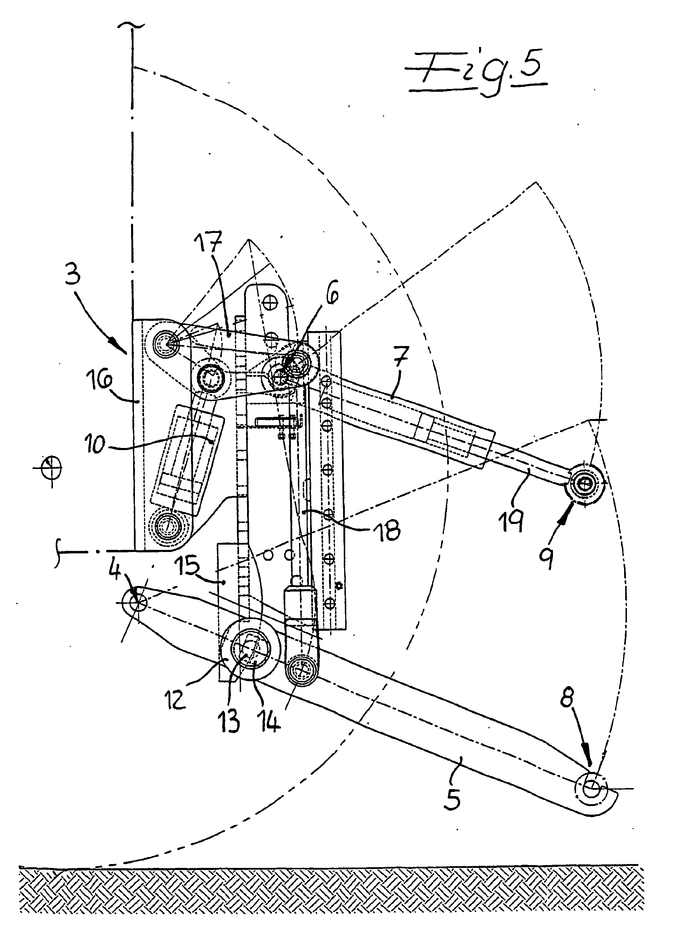

In den Figuren ist eine Dreipunktaufhängung für einen Traktor 1, zum Heben, Senken und/oder Schwenken von zumindest einem am Traktorheck und/oder an der Traktorfront angeordneten Arbeitsgerät 2 dargestellt. Diese Dreipunktaufhängung weist einen Anhängebock 3 mit an traktorseitigen unteren Anlenkpunkten 4 schwenkbar anzulenkenden Unterlenkern 5 und mit einem an einem bockseitigen oberen Anlenkpunkt 6 schwenkbar angelenkten Oberlenker 7 auf. Die Unterlenker 5 sind traktorseitig regelmäßig über z. B. Bolzen mit dem Traktorgetriebe verbunden. Geräteseitig besitzen die Unterlenker 5 jeweils einen unteren Kupplungspunkt 8, während der Oberlenker 7 geräteseitig einen oberen Kupplungspunkt 9 für den Anschluss des jeweiligen Arbeitsgerätes 2 aufweist. Die Unterlenker 5 sind mittels Zylinderkolbenanordnungen 10 betätigbar, der Oberlenker 7 ist selbst als Zylinderkolbenanordnung ausgeführt. An die Unterlenker 5 sind Stabilisatoren 11, 12 angeschlossen. In den Fig. 1 und 2 sind die Stabilisatoren als einerseits an dem Traktor 1, andererseits an den Unterlenkern 5 angelenkte Zylinderkolbenanordnungen 11 ausgebildet. Bei der in den Fig. 3 bis 7 dargestellten Ausführungsform sind die Stabilisatoren als in die Unterlenker 5 integrierte Zylinderkolbenanordnungen 12 ausgebildet, die im Wesentlichen orthogonal zur Traktorlängsachse angeordnet sind und deren Kolbenstangen 13 mit Stabilisierungsbacken 14 mit an dem Anhängebock 3 befestigten und in Richtung der Traktorlängsachse verlaufenden Kurvenscheiben 15 in Eingriff stehen. Die Unterlenker 5 können aus zwei steckbaren Lenkerteilen aufgebaut sein, wobei an dem jeweils vorderen Lenkerteil jeweils eine Aufnahme für den Stabilisator 12 vorgesehen ist.

Der Anhängebock 3 weist beidseitig Montagewangen 16 für die auf die Unterlenker 5 arbeitenden Zylinderkolbenanordnungen auf. Die Montagewangen besitzen einen U-förmigen Querschnitt zur Aufnahme der Zylinderkolbenanordnungen 10. Die Zylinderkolbenanordnungen 10 sind in den Figuren 1 bis 5 unten gelenkig, z. B. mittels Schwenk- oder Kugellager mit den Montagewangen und oben gelenkig, z. B. mittels Schwenk- oder Kugellager, mit Schwenkhebeln 17 nach Art von Kipphebeln verbunden, wobei die Schwenkhebel 17 unter Zwischenschaltung von Hubstangen 18 an die Unterlenker 5 angeschlossen sind. Die Hubstangen 18 sind mittels Schwenk-oder Kugellager einerseits an die Schwenkhebel 17, andererseits an die Unterlenker 5 angeschlossen. - Wie bereits oben erwähnt, ist der Oberlenker von einer an dem Anhängebock 3 angelenkten Zylinderkolbenanordnung 7 gebildet. Die Kolbenstange 19 dieser Zylinderkolbenanordnung 7 ist gelenkig, z. B. mittels Schwenk- oder Kugellager an eine dreieckförmige Lenkerkonstruktion 20, und die Lenkerkonstruktion 20 gelenkig an die Unterlenkerenden angeschlossen.

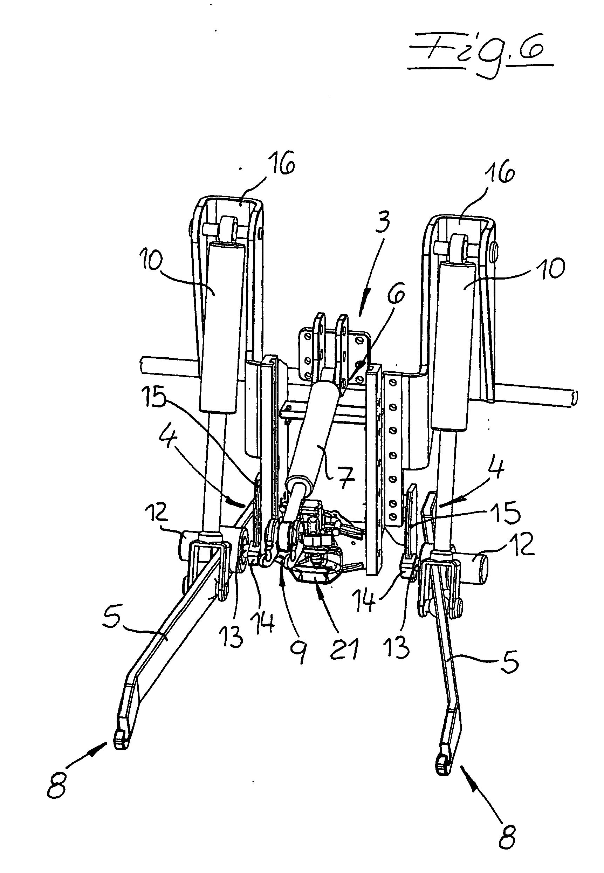

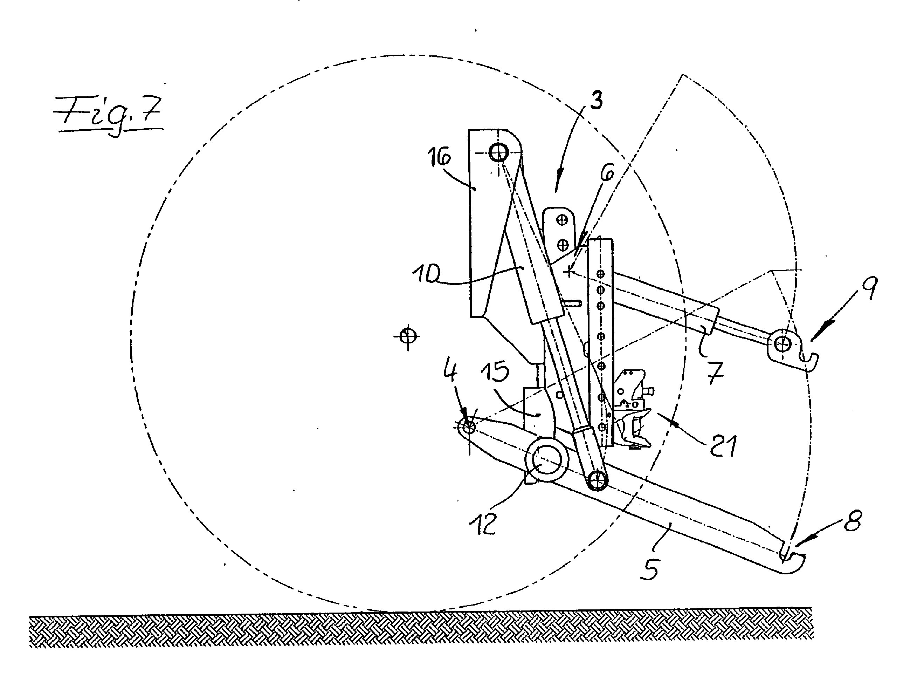

Im Rahmen der Erfindung kann auf die dreieckförmige Lenkerkonstruktion 20 auch verzichtet werden. In einem solchen Fall greifen Ober- und Unterlenker über Fangmäuler bzw. Unter- oder Oberlenkerhaken direkt an die anzukuppelnden landwirtschaftlichen Geräte und folglich das betreffende Arbeitsgerät 2 an. Eine solche Ausführungsform ist beispielsweise in den Figuren 6 und 7 dargestellt. Bei dieser Ausführungsform sind die Zylinderkolbenanordnungen 10 oben gelenkig, z. B. mittels Schwenk- oder Kugellager, mit dem Montagewangen 16 und unten gelenkig, z. B. mittels Schwenk-oder Kugellager und gegebenenfalls unter Zwischenschaltung von die Unterlenker 5 übergreifenden Lagergabeln mit den Unterlenkern 5 verbunden.

Die erfindungsgemäße Dreipunktaufhängung ist mit einer Anhängerkupplung 21 ausgerüstet. Denn der Anhängerbock 3 ist für die Aufnahme einer selbsttätigen bzw. nichtselbsttätigen Anhängerkupplung 21 eingerichtet, die sich im Einsatzfall aus Gründen der Raumfreiheit in einer unteren Position befinden kann.

Der bei der erfindungsgemäßen Dreipunktaufhängung am häufigsten genutzte Arbeitsbereich erstreckt sich auf das untere Wegdrittel wie zum Beispiel beim Pflügen. Die Unterlenker 5 lassen sich über die Zylinderkolbenanordnungen 10 synchron heben und senken. Die Querneigung des jeweiligen Arbeitsgerätes 2 kann durch einen einstellbaren Vorlauf zwischen den Unterlenkern 5 justiert werden. Die eingestellte Querneigung bleibt über die gesamte Hubhöhe oder bei Bedarf nur über einen Teil der Hubhöhe konstant. Im Übrigen erfolgt die vom Geländeprofil abhängige Querneigung selbsttätig. Diese Funktion ist manuell zu- und abschaltbar. - Die Längsneigung des Arbeitsgerätes 2 kann durch Längenänderung des Oberlenkers 7 automatisch oder manuell verstellt werden. Ferner kann die Seitenstabilisierung des Arbeitsgerätes 2 als Funktion einer bestimmten frei wählbaren Hubhöhe automatisch gesteuert werden, und zwar mittels der als Zylinderkolbenanordnungen ausgeführten Stabilisatoren 11 bzw. 12. Die Seitenstabilisierung kann unabhängig von der Hubhöhe ein- und ausgeschaltet werden.

Sie kann ferner unabhängig von der Hubhöhe aus der Mittelstellung nach rechts oder links verschoben werden (z. B. beim Grenzpflügen oder bei einem sonstigen einseitigen Betrieb in z. B. Weinbergen und Obstplantagen). Ferner ist eine hydraulische Drosselung vorgesehen. Das Schwingungsverhalten der Dreipunktaufhängung ist von der Bodenbeschaffenheit abhängig (schwerer / leichter Boden). Das Zu- und Abschalten von nicht dargestelltem Drosseln erfolgt automatisch durch eine elektronische Steuerung. Aus diesem Grunde stehen die Zylinderkolbenanordnungen 10 für die Unterlenker 5, in der Ausführungsform als Oberlenker 7 und/oder als Stabilisatoren 11 bzw. 12 mit einer elektronischen Steuereinheit in Verbindung und sind mit Wegemeßsystemen ausgerüstet. Im Ergebnis wird der Bedienungskomfort der erfindungsgemäßen Dreipunktaufhängung wesentlich erweitert.

## Patentansprüche

1. Traktor mit Dreipunktaufhängung zum Heben, Senken und/oder Schwenken von zumindest einem am Traktorheck und/oder an der Traktorfront angeordneten Arbeitsgerät (2), mit unter Zwischenschaltung eines eine Anhängerkupplung aufnehmenden Anhängebocks (3) an traktorseitigen unteren Anlenkpunkten (4) schwenkbar angelenkten Unterlenkern (5) und zumindest einem an einem traktorseitigen oberen Anlenkpunkt (6) schwenkbar angelenkten Oberlenker (7), wobei die Unterlenker (5) geräteseitig jeweils einen unteren Kupplungspunkt (8) und Oberlenker (7) geräteseitig einen oberen Kupplungspunkt für den Anschluss des Arbeitsgerätes (2) aufweisen und die Unterlenker (5) und/oder der Oberlenker (7) zum Heben, Senken und/oder Schwenken mittels Zylinderkolbenanordnungen (10) betätigbar sind, und wobei der Anhängebock (3) beidseitig Montagewangen (16) für die auf die Unterlenker (5) arbeitenden Zylinderkolbenanordnungen (10) aufweist und wobei an die Unterlenker (5) Stabilisatoren (11, 12) angeschlossen sind die als in die Unterlenker (5) integrierte Zylinderkolbenanordnungen 12 ausgebildet sind, die im wesentlichen orthogonal zur Traktorlängsachse angeordnet sind und deren Kolbenstangen (13) mit Stabilisierungsbacken (14) mit an dem Anhängebock (3) befestigten und in Richtung der Traktorlängsachse verlaufenden Kurvenscheiben (15) in Eingriff stehen.

2. Dreipunktaufhängung nach Anspruch 1 **dadurch gekennzeichnet, dass** die Unterlenker (5) aus zwei steckbaren Lenkerteilen aufgebaut sind und dass an dem jeweils vorderen Lenkerteil jeweils eine Aufnahme für den Stabilisator (12) vorgesehen ist.

3. Dreipunktaufhängung nach einem der Ansprüche 1 bis 2, **dadurch gekennzeichnet, dass** die Montagewangen (16) einen U-förmigen Querschnitt zur Aufnahme der Zylinderkolbenanordnungen (10) aufweisen.

4. Dreipunktaufhängung nach einem der Ansprüche 1 bis 3, **dadurch gekennzeichnet, dass** die Zylinderkolbenanordnungen (10) oben gelenkig, z. B. mittels Schwenk- oder Kugellager, mit den Montagewangen (16) und unten gelenkig, z. B. mittels Schwenk- oder Kugellager und gegebenenfalls unter Zwischenschaltung von die Unterlenker (5) übergreifenden Lagergabeln mit den Unterlenkern (5) verbunden sind.

5. Dreipunktaufhängung nach einem der Ansprüche 1 bis 4, **dadurch gekennzeichnet, dass** die Zylinderkolbenanordnungen (10) unten gelenkig, z. B. mittels Schwenk- oder Kugellager mit den Montagewangen (16) und oben gelenkig, z. B. mittels Schwenk- oder Kugellager, mit Schwenkhebeln (17) verbunden sind, und dass die Schwenkhebel (17) unter Zwischenschaltung von Hubstangen (18) an die Unterlenker (5) angeschlossen sind.

6. Dreipunktaufhängung nach einem der Ansprüche 1 bis 5, **dadurch gekennzeichnet, dass** die Hubstangen (18) mittels Schwenk- oder Kugellager einerseits an die Schwenkhebel (17), andererseits an die Unterlenker (5) angeschlossen sind.

7. Dreipunktaufhängung nach einem der Ansprüche 1 bis 6, **dadurch gekennzeichnet, dass** der Oberlenker von einer an dem Anhängebock (3) angelenkten Zylinderkolbenanordnung (7) gebildet ist.

8. Dreipunktaufhängung nach einem der Ansprüche 1 bis 7, **dadurch gekennzeichnet, dass** die Kolbenstange (19) /oder der Zylinder der Zylinderkolbenanordnung (7) gelenkig, z. B. mittels Schwenk- oder Kugellager an eine dreieckförmige Lenkerkonstruktion (20), und die Lenkerkonstruktion (20) gelenkig an die Unterlenkerenden angeschlossen ist.

9. Dreipunktaufhängung nach einem der Ansprüche 1 bis 8, **dadurch gekennzeichnet, dass** die Zylinderkolbenanordnungen (10) für die Unterlenker (5), als Oberlenker (7) und/oder als Stabilisatoren (11 bzw. 12) mit Wegemeßsystemen ausgerüstet sind und mit einer elektronischen Steuereinheit in Verbindung stehen.

## Claims

1. Three-point suspension for raising, lowering and/or pivoting at least one implement (2) arranged on the rear and/or front face of a tractor, with the intermediate subassembly of a suspension frame (3) receiving a suspension device, lower drag links (5) pivoted on lower articulation points (4) on the tractor side, and at least one upper articulation point (6) on the tractor side, the lower drag links (5) comprising on the implement side a lower suspension point (8) and the upper drag link (7) comprising, on the implement side, an upper suspension point (9) for attaching the implement (2) and the lower drag links (5) and/or the upper drag link (7) capable of being manoeuvred by piston/cylinder arrangements (10), in order to raise, lower and/or pivot, and the suspension frame (3) comprising, on both sides, assembly flanges (16) for the piston/cylinder arrangements acting on the lower drag links (10) and stabilisation shoes (14) engaging in cam plates (15) secured to the suspension frame (3), and extending in the direction of the longitudinal axis of the tractor.

2. The three-point suspension according to claim 1, **characterised in that** the lower drag links (5) are constructed of two plug-in drag link parts, and **in that** a recess is provided on each of the front drag link parts for the stabiliser (12).

3. The three-point suspension according to any one of claims 1 to 2, **characterised in that** the assembly flanges (16) have a U-shaped cross-section for receiving the cylinder piston arrangements (10).

4. The three-point suspension according to any one of claims 1 to 3, **characterised in that** the cylinder piston arrangements (10) are articulated at the top, e.g. by means of swivel or ball bearings, to the assembly flanges (16), and are articulated at the bottom, e.g. by means of swivel or ball bearings and, if necessary, with the insertion of bearing forks, to the lower drag links (5).

5. The three-point suspension according to any one of claims 1 to 4, **characterised in that** the cylinder piston arrangements (10) are articulated at the bottom, e.g. by means of swivel or ball bearings, to the assembly flanges (16), and are articulated at the top, e.g. by means of swivel or ball bearings, to swivelling levers (17), and **in that** the swivelling leers (17) are connected to the lower drag links (5) with the insertion of lifting rods (18).

6. The three-point suspension according to any one of claims 1 to 5, **characterised in that** the lifting rods (18) are connected by means of swivel or ball bearings on one side to the swivelling leers (17) and on the other side to the lower drag links (5).

7. The three-point suspension according to any one of claims 1 to 6, **characterised in that** the upper drag link is formed by a cylinder piston arrangement (7) articulated to the suspension frame (3).

8. The three-point suspension according to any one of claims 1 to 7, **characterised in that** the piston rod
(19) or cylinder of the cylinder piston arrangement (7) is articulated, e.g. by means of swivel or ball bearings, to a triangular drag link structure (20), and **in that** the drag link structure (20) is articulated to the lower drag link ends.

9. The three-point suspension according to any one of claims 1 to 8, **characterised in that** the cylinder piston arrangements (10) for the upper drag links (5), are equipped as upper drag links (7) and/or as stabilisers (11 and 12 respectively) with displacement transducer systems and are connected to an electronic control unit.

## Revendications

1. Attelage à trois points, pour lever, abaisser et/ou faire pivoter au moins un ustensile (2) disposé sur la face arrière et/ou sur la face frontale d'un tracteur, avec sous montage intermédiaire d'un châssis d'attelage (3) réceptionnant un dispositif d'attelage, des bras oscillants inférieurs (5) articulés de façon pivotante sur des points d'articulation inférieurs (4) côté tracteur et au moins un bras oscillant supérieur (7) articulé sur un point d'articulation supérieur (6) côté tracteur, les bras oscillants inférieurs (5) comportant côté ustensile un point d'attelage inférieur (8) et le bras oscillant supérieur (7) comportant côté ustensile un point d'attelage supérieur (9) pour l'accrochage de l'ustensile (2) et les bras oscillants inférieurs (5) et/ou le bras oscillant supérieur (7) pouvant être manoeuvrés au moyen d'agencements piston/cylindre (10) pour lever, abaisser et/ou faire pivoter, et le châssis d'attelage (3) comportant bilatéralement des joues de montage (16) pour les agencements piston/cylindre agissant sur les bras oscillants inférieurs (10) et des joues de stabilisation (14) étant engagées dans des cames (15) fixées sur le châssis d'attelage (3) et s'étendant en direction de l'axe longitudinal du tracteur.

2. Attelage à trois points selon la revendication 1, **caractérisé en ce que** les bras oscillants inférieurs (5) sont constitués de deux éléments de bras oscillants enfichables et **en ce que** sur la partie antérieure respective du bras oscillant, on a prévu respectivement un logement pour le stabilisateur (12).

3. Attelage à trois points selon l'une quelconque des revendications 1 et 2, **caractérisé en ce que** les joues de montage (16) présentent une section transversale en forme de U pour le logement des agencements piston/cylindre (10).

4. Attelage à trois points selon l'une quelconque des revendications 1 à 3, **caractérisé en ce que** les agencements piston/cylindre (10) sont reliés de façon articulée sur le haut, par exemple au moyen de paliers pivotants ou de roulements à billes avec les joues de montage (16) et sont reliés de façon articulée sur le bas, par exemple au moyen de paliers pivotants ou de roulements à billes, sous montage intermédiaire de fourches de roulement chevauchant les bras oscillants inférieurs (5) avec les bras oscillants inférieurs (5).

5. Attelage à trois points selon l'une quelconque des revendications 1 à 4, **caractérisé en ce que** les agencements piston/cylindre (10) sont reliés de façon articulée sur le bas, par exemple au moyen de paliers pivotants ou de roulements à billes avec les joues de montage (16) et sont reliés de façon articulée sur le haut, par exemple au moyen de paliers pivotants ou de roulements à billes avec des leviers pivotants (17),et **en ce que** les leviers pivotants (17) sont raccordés sur les bras oscillants inférieurs (5) sous montage intermédiaire de tiges de pistons (18).

6. Attelage à trois points selon l'une quelconque des revendications 1 à 5, **caractérisé en ce que** les tiges de pistons (18) sont raccordées au moyen de paliers pivotants ou de roulements à billes, d'une part sur les leviers pivotants (17), d'autre part sur les bras oscillants inférieurs (5).

7. Attelage à trois points selon l'une quelconque des revendications 1 à 6, **caractérisé en ce que** le bras oscillant supérieur est formé par un agencement piston/cylindre (7) articulé sur le châssis d'attelage (3).

8. Attelage à trois points selon l'une quelconque des revendications 1 à 7, **caractérisé en ce que** la tige de piston (19) ou le cylindre de l'agencement piston/cylindre (7) est raccordée de façon articulée, par exemple au moyen de paliers pivotants ou de roulements à billes sur une structure triangulaire de bras oscillants (20) et **en ce que** la structre de bras oscillants (20) est raccordée de façon articulée sur les extrémités des bras oscillants inférieurs.

9. Attelage à trois points selon l'une quelconque des revendications 1 à 8, **caractérisé en ce que** les agencements piston/cylindre (10) pour les bras oscillants inférieurs (5) faisant office de bras oscillants supérieurs (7) et/ou de stabilisateurs (11 ou 12) sont équipés de systèmes de capteurs de déplacement et sont en liaison avec une unité de commande électronique.
